# EUROPEAN PATENT SPECIFICATION

(11) **EP 2 475 517 B1**
(45) Date of publication and mention of the grant of the patent: **29.04.2015**
(21) Application number: 10815693.6
(22) Date of filing: 27.08.2010
(51) Int. Cl.: B31D 3/02, B32B 29/00, B32B 3/12, B32B 37/12, B32B 37/14, B32B 7/12, E04C 2/36

(54) **BOARD AND METHOD FOR MANUFACTURING A BOARD**
BRETT UND VERFAHREN ZUR HERSTELLUNG EINES BRETTS
PLANCHE ET PROCÉDÉ DE FABRICATION D'UNE PLANCHE

(30) Priority: 11.09.2009 SE 0950651
(43) Date of publication of application: 18.07.2012
(73) Proprietor: STORA ENSO RE-BOARD AB, 601 04 Norrköping (SE)
(72) Inventor: ALDÉN, Kurt, S-61633 Åby (SE)
(74) Representative: Lindberg, Berndt Åke
(86) International application number: PCT/SE2010/050922
(87) International publication number: WO 2011/031209

(56) References cited:
- EP-A1- 1 714 776
- EP-A2- 0 068 873
- DE-A1- 19 955 183
- GB-A- 985 823
- GB-A- 1 060 121
- GB-A- 2 277 709
- US-A- 3 661 099
- US-A- 5 213 050
- US-A- 5 975 180
- US-A1- 2006 204 714
- US-B1- 6 612 247
- 'Handbook of adhesives and sealants', MCGRAW-HILL, NEW YORK, ISBN 0-07-049888-1 article PETRIE E. M.: 'Polyvinyl acetate', pages 403 - 405, XP003028202

## Description

### Field of invention

The present invention relates to a method for manufacturing a light-weight board. The invention further relates to a board.

### Technical Background

In recent years, boards based on a core sandwiched between printable facing sheets have been commonly used to replace traditional board material, such as MDF, in e.g. furniture, advertising signs and in commercial stands.

US3661099 discloses a pallet deck comprising a board based on a core that is sandwiched between upper and lower facing sheets. Both the core and the facing sheets of said board are paper sheets. The paper sheets forming the core are corrugated and stacked, so as to form flutes or channels, the longitudinal axes of which are perpendicular to the facing sheets.

EP1714776A1 discloses a light-weight wood fiber based board of the above mentioned sandwiched-type, wherein the flutes or channels are tilted in relation to the facing sheets. Such a construction gives rise to an increased strength, since the effective contact between the walls of the structure is increased.

GB 1,060,121 discloses a method of manufacturing a wood-fiber based board using a water-based adhesive in the case of a honeycomb core.

WO200705228 discloses a method and an apparatus for laminating a material. Said method includes the steps of applying a hot melt adhesive to a laminate sheet and pressing the hot melt adhesive covered laminate sheet against a material slab. The material slab may be a honeycomb slab.

One problem with the method disclosed in WO200705228 is that the use of a hot melt adhesive gives rise to a weak bending resistance of the board. The hot melt adhesive joint is also sensitive to heat, which makes the board instable at hot environments. Moreover, a hot melt adhesive has a detrimental impact on the environment. Yet another problem with the method disclosed in WO200705228 is that an unnecessary amount of the adhesive is consumed, since the adhesive is applied to the whole surface of the laminate sheet, while the adhesive bond is only formed between the end portion of the honeycomb channels and the laminate sheet.

### Summary of invention

It is an object of the invention to provide a method for producing a light weight board with an increased strength. Another object of the invention is to provide a method for producing a light weight board with a high bending resistance and which board is insensitive to heat. A further object is to produce a light weight board in a more efficient and environmental friendly way compared to the methods of the prior art. These objects, as well as other advantages, are achieved with the method according to the present invention. The method according to the invention comprises the steps of providing a core formed as a three dimensional body presenting a first face and a second face and a wall structure defining a plurality of channels, each channel having a longitudinal axis intersecting the first face at an angle (α) which is less than 90 degrees, more preferably at an angle between 45 and 85 degrees; applying a water based adhesive to the first face of the core; and laminating a first facing sheet to the first face of the board.

The use of a water based adhesive to attach a facing sheet to the core gives rise to a strong board, which is insensitive to heat and which has a high bending resistance. Moreover, when a water based adhesive is used, the cutting of the board into a desired contour is facilitated. The cutting is oftentimes accomplished by means of a razorblade or an oscillating knife. When a hot melt adhesive is used, clogging of the adhesive on the knives may occur, since the knives become heated by the friction at cutting. However, when a water based adhesive is used, in accordance with the invention, clogging of the adhesive on the knives is avoided.

The tilted wall structure used as core in the present invention makes use of a water based adhesive possible, since the strong material enables the laminated board to be dried without impacting quality negatively.

Another advantage with the present invention is that the consumption of the adhesive is minimized, since the adhesive is applied on the end portion of the channels forming the first face of the core, i.e. the adhesive is only applied at the parts forming the adhesive bond and not on the whole surface of the facing sheet.

The water-based adhesive used in the method according to the invention may be a water based polymer adhesive and may be selected from the group consisting of polyvinyl acetate and formulations based thereon, polyvinyl alcohol and formulations based thereon, dextrins and formulations based thereon, polyacrylics and formulations based thereon, vinyl acetate-acrylic copolymers and formulations based thereon, ethylene-vinyl acetate copolymers and formulations based thereon, vinyl acetate-ethylene copolymers and formulations based thereon, and other adhesives of similar characteristics, and blends of any of the former. Preferably, the adhesive is a polyvinylacetat. Most preferably, the adhesive has a high solid content, e.g. a solid content of at least 50 %, more preferably at least 60%, such as a solid content of 60 - 80 % or 60 - 70 %. A high solid content of the adhesive minimizes the moisture content of the facing sheet of the board, and thus gives rise to a hard board surface.

In another embodiment of the invention, the method further comprises the steps of applying a water based adhesive to the second face of the core simultaneously as a water based adhesive is applied to the first face of the core, and laminating a second facing sheet to the second face of the board, simultaneously as the first facing sheet is laminated to the first face of the board.

Application of the adhesive on the two opposite faces of the board and lamination of two facing sheets to the opposed first and second face of the core simultaneously involve that the core is subjected to the same stress from two opposite directions simultaneously, which in turn gives rise to a plane surface of the board.

The facing sheet or sheets may be pre-heated prior to the step of laminating the first and/or second facing sheet to the first and/or second face of the core. Pre-heating of the facing sheet facilitates the evaporation of the aqueous solvent and the curing of the adhesive. This gives rise to a board with better strength properties, since even moisture content of the core is achieved. Pre-heating of the facing sheet may be accomplished by laminating the facing sheet onto the core by means of a heated roller. In this way, the facing sheet is in contact with the heated roller prior to being laminated onto the core as well as at the time of lamination.

In a second aspect, the invention provides a board comprising a core formed as a three dimensional body presenting a first face and a second face opposed to said first face and a wall structure defining a plurality of channels intersecting the first face at an angle α) which is less than 90 degree, a facing sheet attached to said first face and a water-based adhesive arranged between said facing sheet and said first face in order to fix said facing sheet to the first face of the core. As mentioned above, such a board shows an exceptional strength, bending resistance and heat insensitivity.

### Brief description of the drawings

Fig. 1 shows a schematic perspective view of a core with a tilted wall structure
Fig. 2 shows a flow chart illustrating a method of manufacturing a board according to one embodiment of the invention

### Detailed description of the invention

In accordance with the invention, a water-based adhesive is applied on a first face of a core comprising a wall structure defining a plurality of channels, which first face is formed by the end portion of the channels. Thereafter, a facing sheet is laminated onto said face of the core. In this way, a board with an increased strength is produced.

The core may be manufactured by first providing a block of material presenting a plurality of channels, which block has a thickness that is greater than the desired thickness of the core and then cutting from said block of material a piece that is to form the core. The block of material may be formed of a plurality of stacked corrugated sheets of wood fiber based material, such as paper or cardboard. However, other materials may also be used, such as metal sheet, polymer sheets etc. Each sheet in the stack may be adhered to the adjacent sheet by means of an adhesive, preferably a water-based adhesive. Said plurality of corrugated sheets may be interleaved with a plurality of substantially flat sheet.

The water-based adhesive applied on the first face of the core may, e.g., be polyvinyl acetate. The adhesive may be applied to the end portions of the channels by means of application rollers. This minimizes the consumption of the adhesive. In order to further minimize the consumption, the adhesive may be foamed, i.e. a gas, e.g. air, may be injected in the adhesive whereby the volume is increased.

The facing sheet may be a sheet of paper, cardboard laminate, sheet metal, wood veneer, polymer films or sheets or other materials which is attachable to the core to provide a surface, which may be e.g. smooth, printable and/or water repellant. In one preferred embodiment the facing sheet is high density fiberboard, HDF, which is supplied from a roll and conducted to the face of the core by means of a heated roller. Thus, according to this embodiment, HDF board is laminated onto the core on-line in the manufacturing process. The high density fiber board (HDF) which may be laminated on-line in the process according to the invention may preferably have a thickness of less than 2 mm, preferably between 0,5 and 2 mm or even between 0,5 and 1 mm. It has surprisingly been shown that such a thin HDF may be supplied from a roll in an on-line laminating process.

A second facing sheet may also be attached to a second face of the core, which second face is opposite and mutually parallel to the first face. Preferably, the first and the second facing sheet are attached to the first and second faces simultaneously by means of opposite arranged rollers.

The facing sheet may be pre-heated prior to the step of laminating the first and/or second facing sheet onto the first and/or second face of the core. The pre-heating of the facing sheet may be accomplished by means of a heated roller. The roller may be heated to a temperature of 90 - 95 degrees, whereby the temperature of the facing sheet also reaches temperatures of almost 90 degrees when laminated.

The laminated panel may thereafter be cut to desired contour by means a razorblade or an oscillating knife. Edge liners may be attached to the side portions of the cut core, thus to the portions of the core that are connecting the first and the second faces of the core. Said side portions may have an extension in a plane which is perpendicular to the first and the second faces of the core. The edge liners may be attached to the core using any known adhesive, e.g. a hot melt adhesive or a water based adhesive.

The channels defining the wall structure of the core may have longitudinal axis which intersect the first face of the core at an angle which is less than 90 degrees, preferably between 45 and 85 degrees. Such a tilted structure gives rise to an increased strength. A core with a tilted wall structure may be provided by cutting a block of material so that the longitudinal axis intersects the first face at an angle which is less than 90 degrees or at an angle between 45 and 85 degrees. This may be accomplished by provision of a block of material in the form of parallelepiped, presenting two adjacent block faces intersecting at an angle that is equal to the angle at which the longitudinal axis is to intersect the first face. Said block of material may thereafter be cut in a direction parallel with one of the block faces to form a core with a tilted wall structure. In an alternative embodiment, a block of material presenting perpendicular block faces is cut at a cutting angle relative to one of the block faces, which cutting angle is equal to said angle at which the longitudinal axis is to intersect the first face.

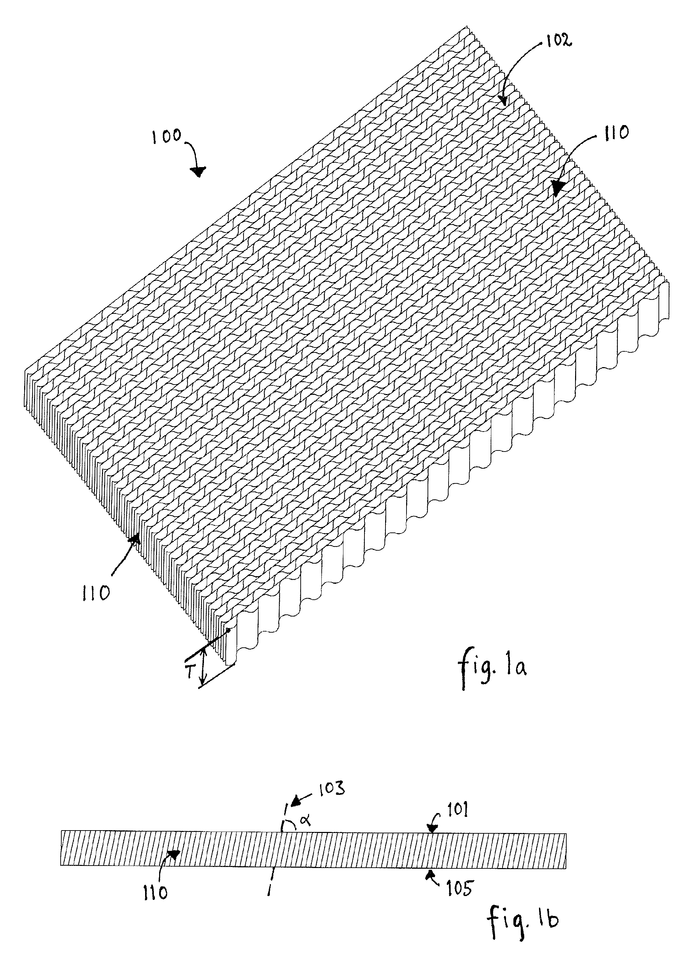

Fig. 1a and 1b show schematic perspective views of a core with a tilted wall structure. The core shown in fig. 1a and 1b presents a first face 101 and an in relation thereto parallel, a second face 105. The faces 101, 105 are separated by a core thickness T and there are side portions 110, connecting the faces 101, 105. Fig. 1b is a side view of the core 100, showing the side portion 110. Typically, the thickness T of the core 100 is between 8 - 50 mm. The core 100 is constituted of an internal wall structure defining channels 102 that are tilted in relation to the faces 101, 105, i.e. each channel 102 has a longitudinal axis 103 that intersects the faces 101, 105 at an angle α of intersection being less than 90 degrees. According to the invention, a water based adhesive is applied to the first face, 101, and/or to the second face, 105, of the core, whereupon a first and/or a second facing sheet is/are laminated thereto (said facing sheets are not shown in fig. 1).

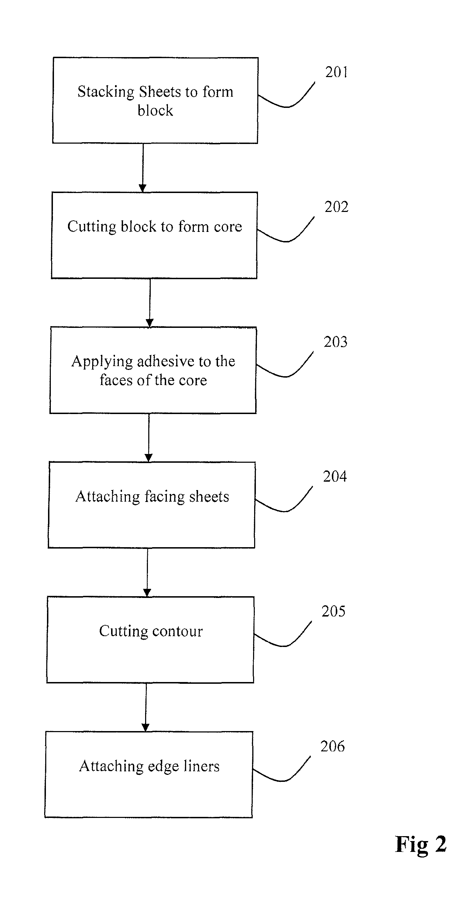

Fig. 2 shows a flow chart illustrating a method of manufacturing a curved laminate according to one embodiment of the invention.

In a first step, 201, corrugated sheets are stacked and adhered using an offset so that a parallelepiped, presenting two adjacent block faces intersecting at an angle that is equal to the angle between the longitudinal axis and the first face, is formed.

In step 202, the parallelepiped is cut into a core with desired thickness. The cutting is performed by means of a razor blade in a direction parallel with one of the block faces.

In step 203, a water based adhesive is applied to the first face, 101, and to the second face 105, of the core simultaneously by means of application rollers arranged on mutually opposite sides of the core.

In step 204, a first facing sheet is attached to the first face and, simultaneously, a second facing sheet is attached to the second face of the core by means of two oppositely arranged rollers that are heated to 90 - 95 °C.

In step 205, the board is cut into desired contours.

In step 206, edge liners are attached to the side-edges of the board by means of a hot melt adhesive.

Said steps, 201 - 206, are preferably performed in an on-line process.

## Claims

1. A method for manufacturing a board formed as a three dimensional body, the method comprising;
providing a core, formed as a three dimensional body presenting a first face and a second face and a wall structure defining a plurality of channels, each channel having a longitudinal axis intersecting the first face at an angle(α) which is less than 90 degrees,
applying a water based adhesive to the first face of the core, and
laminating a first facing sheet to the first face of the board.

2. A method according to claim 1, wherein the adhesive is a polyvinylacetat.

3. A method according to anyone of claims 1 or 2, wherein the adhesive has a solid content of at least 50 %

4. A method according to anyone of claims claim 1 - 3, wherein the angle (α) is between 45 and 85 degrees.

5. A method according to anyone of claims 1 - 4, further comprising the steps of;
applying a water based adhesive to the second face of the core simultaneously as a water based adhesive is applied to the first face of the core,
laminating a second facing sheet to the second face of the board, simultaneously as the first facing sheet is laminated to the first face of the core.

6. A method according to any one of claims 1 - 5, further comprising the step of pre-heating the first and/or second facing sheet prior to the step of laminating the first and/or second facing sheet onto the first and/or second face of the core.

7. A method according to any one of claims 1 - 6, wherein the facing sheet is laminated onto the core by means of a heated roller.

8. A method according to any one of claims 1 - 7, wherein the facing sheet comprises HD-MDF and is applied on-line to the core by means of a roller.

9. A board comprising
a core formed as a three dimensional body presenting a first face and a second face opposed to said first face and a wall structure defining a plurality of channels intersecting the first face at an angle (α) which is less than 90 degrees ,
a facing sheet attached to said first face and
a water-based adhesive arranged to fix said facing sheet to the first face of the core.

10. A board according to claim 9, wherein the adhesive is a polyvinylacetat.

11. A board according to anyone of claims 9 or 10, wherein the adhesive has a solid content of at least 50 %

12. A board according to anyone of claim 9 - 11, wherein the channels intersects the first face at an angle (α) which is between 45 - 80 degrees.

13. A board according to anyone of claims 9 - 12, wherein a second facing sheet is attached to the second face of the core by means of a water-based adhesive.

14. A board according to any one of claims 9 - 13, wherein the facing sheet comprises HDF.

## Patentansprüche

1. Verfahren zur Herstellung eines als dreidimensionaler Körper ausgebildeten Bretts, umfassend:
Bereitstellen eines als dreidimensionaler Körper ausgebildeten Kernstücks mit einer ersten Fläche und einer zweiten Fläche sowie einer Wandstruktur, die eine Vielzahl von Kanälen definiert, wobei jeder Kanal über eine Längsachse verfügt, welche die erste Fläche in einem Winkel (α), der kleiner als 90 Grad ist, schneidet,
Auftragen eines wasserhaltigen Klebstoffs auf die erste Fläche des Kernstücks und
Beschichten der ersten Fläche des Bretts mit einer ersten Verkleidungsplatte.

2. Verfahren nach Anspruch 1, wobei der Klebstoff ein Polyvinylacetat ist.

3. Verfahren nach Anspruch 1 oder 2, wobei der Klebstoff einen Feststoffgehalt von mindestens 50 % aufweist.

4. Verfahren nach einem der Ansprüche 1-3, wobei der Winkel (α) zwischen 45 und 85 Grad beträgt.

5. Verfahren nach einem der Ansprüche 1-4, weiterhin umfassend die folgenden Schritte:
Auftragen eines wasserhaltigen Klebstoffes auf die zweite Fläche des Kernstücks, gleichzeitig mit dem Auftragen eines wasserhaltigen Klebstoffes auf die erste Fläche des Kernstücks,
Beschichten der zweiten Fläche des Bretts mit einer zweiten Verkleidungsplatte, gleichzeitig mit dem Beschichten der ersten Fläche des Kernstücks mit der ersten Verkleidungsplatte.

6. Verfahren nach einem der Ansprüche 1-5, weiterhin umfassend den Schritt des Vorheizens der ersten und/oder zweiten Verkleidungsplatte, bevor die erste und/oder zweite Fläche des Kernstücks mit der ersten und/oder zweiten Verkleidungsplatte beschichtet wird.

7. Verfahren nach einem der Ansprüche 1-6, wobei die Beschichtung des Kernstücks mit der Verkleidungsplatte mithilfe einer beheizten Walze erfolgt.

8. Verfahren nach einem der Ansprüche 1-7, wobei es sich um eine HD-MDF-Verkleidungsplatte handelt, die direkt mithilfe einer Walze auf das Kernstück aufgebracht wird.

9. Brett, umfassend:
ein als dreidimensionaler Körper ausgebildetes Kernstück mit einer ersten Fläche und einer der ersten Fläche gegenüberliegenden zweiten Fläche sowie einer Wandstruktur, die eine Vielzahl von Kanälen definiert, welche die erste Fläche in einem Winkel (α), der kleiner als 90 Grad ist, schneiden,
eine an der ersten Fläche angebrachte Verkleidungsplatte, und
einen wasserhaltigen Klebstoff, der für die Befestigung der Verkleidungsplatte an der ersten Fläche des Kernstücks angeordnet ist.

10. Brett nach Anspruch 9, wobei der Klebstoff ein Polyvinylacetat ist.

11. Brett nach Anspruch 9 oder 10, wobei der Klebstoff einen Feststoffgehalt von mindestens 50 % aufweist.

12. Brett nach einem der Ansprüche 9-11, wobei die Kanäle die erste Fläche in einem Winkel (α) schneiden, der zwischen 45-80 Grad beträgt.

13. Brett nach einem der Ansprüche 9-12, wobei eine zweite Verkleidungsplatte mithilfe eines wasserhaltigen Klebstoffs an der zweiten Fläche des Kernstücks angebracht wird.

14. Brett nach einem der Ansprüche 9-13, wobei es sich bei der Verkleidungsplatte um eine HD-Faserplatte handelt.

## Revendications

1. Procédé de fabrication d'un panneau formé en tant que corps tridimensionnel, le procédé comprenant ;
la fourniture d'une âme, formée en tant que corps tridimensionnel présentant une première face et une deuxième face ainsi qu'une structure de paroi définissant une pluralité de canaux, chaque canal ayant un axe longitudinal coupant la première face au niveau d'un angle (α) inférieur à 90 degrés,
l'application d'un adhésif à base d'eau sur la première face de l'âme, et
la stratification d'une première feuille de parement sur la première face du panneau.

2. Procédé selon la revendication 1, dans lequel l'adhésif est un acétate de polyvinyle.

3. Procédé selon l'une quelconque des revendications 1 ou 2, dans lequel l'adhésif a une teneur en matière solide d'au moins 50 %

4. Procédé selon l'une quelconque des revendications 1 -3, dans lequel l'angle (α) se situe entre 45 et 85 degrés.

5. Procédé selon l'une quelconque des revendications 1 - 4, comprenant en outre les étapes consistant à ;
appliquer un adhésif à base d'eau sur la deuxième face de l'âme simultanément à l'application d'un adhésif à base d'eau sur la première face de l'âme,
stratifier une deuxième feuille de parement sur la deuxième face du panneau, simultanément à la stratification de la première feuille de parement sur la première face de l'âme.

6. Procédé selon l'une quelconque des revendications 1 - 5, comprenant en outre l'étape consistant à préchauffer la première et/ou la deuxième feuille de parement avant l'étape consistant à stratifier la première et/ou la deuxième feuille de parement sur la première et/ou la deuxième face de l'âme.

7. Procédé selon l'une quelconque des revendications 1 - 6, dans lequel la feuille de parement est stratifiée sur l'âme au moyen d'un rouleau chauffé.

8. Procédé selon l'une quelconque des revendications 1 - 7, dans lequel la feuille de parement comprend un MDF-HDF et est appliquée en ligne sur l'âme au moyen d'un rouleau.

9. Panneau comprenant
une âme formée en tant que corps tridimensionnel présentant une première face et une deuxième face opposée à ladite première face et une structure de paroi définissant une pluralité de canaux coupant la première face au niveau d'un angle (α) inférieur à 90 degrés,
une feuille de parement fixée à ladite première face et
un adhésif à base d'eau agencé de façon à fixer ladite feuille de parement à la première face de l'âme.

10. Panneau selon la revendication 9, dans lequel l'adhésif est un acétate de polyvinyle.

11. Panneau selon l'une quelconque des revendications 9 ou 10, dans lequel l'adhésif a une teneur en matière solide d'au moins 50 %

12. Panneau selon l'une quelconque des revendications 9 - 11, dans lequel les canaux coupent la première face au niveau d'un angle (α) qui se situe entre 45 - 80 degrés.

13. Panneau selon l'une quelconque des revendications 9 - 12, dans lequel une deuxième feuille de parement est fixée à la deuxième face de l'âme au moyen d'un adhésif à base d'eau.

14. Panneau selon l'une quelconque des revendications 9 - 13, dans lequel la feuille de parement comprend un HDF.
